# EUROPÄISCHE PATENTSCHRIFT

(11) **EP 0 660 060 B1**
(45) Veröffentlichungstag und Bekanntmachung des Hinweises auf die Patenterteilung: **14.01.1998**
(21) Anmeldenummer: 94119103.3
(22) Anmeldetag: 03.12.1994
(51) Int. Cl.: F27B 1/16, C04B 2/12, F23D 17/00

(54) **Verfahren und Zentralbrenner zum beheizen von Schachtöfen**
Process and central burner for heating of shaft furnaces
Procédé et brûleur central pour un four à aire

(30) Priorität: 08.12.1993 DE 4341752
(43) Veröffentlichungstag der Anmeldung: 28.06.1995
(73) Patentinhaber: RHEINBRAUN AG, 50935 Köln (DE); Sauerländische Kalkindustrie GmbH, D-59929 Brilon (DE)
(72) Erfinder: Treutlein, Günter, D-50858 Köln (DE); Thiel, Leonhard, D-34431 Marsberg (DE)
(74) Vertreter: Koepsell, Helmut, Dipl.-Ing.

(56) Entgegenhaltungen:
- DE-A- 3 806 710
- DE-C- 3 725 559
- ZEMENT, KALK, GIPS, Bd.42, Nr.1, Januar 1989, WIESBADEN DE Seiten 21 - 26, XP000024625 W.HÖLTJE 'Brennstoffalternativen zum Koks bei konventionellen Schachtöfen'
- ZEMENT, KALK, GIPS, Bd.38, Nr.2, Februar 1985, WIESBADEN DE Seiten 84 - 86 D.LEWERENZ 'Umstellung eines konventionellen Schachtofens auf Braunkohlenstaubfeuerung'

## Beschreibung

Die Erfindung betrifft ein Verfahren zum Beheizen von Schachtöfen für die Wärmebehandlung von mineralischem Gut, beispielsweise Kalkstein oder Dolomit, innerhalb dieses Schachtofens. Die Erfindung betrifft auch einen Zentralbrenner zur Durchführung des Verfahrens, der einen zylinderförmigen Brennerkopf aufweist, aus dessen oberen und unteren Teil jeweils ein brennbares Gas oder Gas-Luft-Gemisch in den Schacht des Ofens austritt. Im mittleren Teil des Brennerkopfes, d. h. zwischen dem oberen und unteren Teil, tritt Spreizluft in den Schacht des Ofens aus. Mit dem Gas oder Gas-Luft-Gemisch wird die Entsäuerungsreaktion des mineralischen Einsatzgutes innerhalb des Schachtes des Ofens bei Temperaturen oberhalb 600° C ausgelöst.

Ein gattungsgemäßes "Verfahren und Vorrichtung zum Beheizen von Schachtöfen durch einen Zentralbrenner" ist beispielsweise aus der DE 37 25 559 C1 bekannt. Das bekannte Verfahren und der Zentralbrenner sind für den Betrieb von Schachtöfen mit Hilfe von Gas, beispielsweise Erdgas, als Brennstoff vorgesehen. Insbesondere beim Brennen von Kalk liefert der Betrieb mit Erdgas einen Brandkalk von hoher Qualität. Die Verwendung von Gas als Brennstoff ist allerdings relativ teuer, so daß nach Mitteln und Möglichkeiten gesucht wurde, das teure Gas soweit wie möglich durch andere Brennstoffe zu ersetzen bzw. zu substituieren, die preisgünstiger sind.

Ein solcher gegenüber Erdgas wesentlich preisgünstigerer Brennstoff ist beispielsweise Kohlenstaub. Ein für die Verwendung sowohl von Gas als auch von Kohlenstaub geeigneter "Brenner für Einschachtöfen zum Brennen von Kalkstein" ist beispielsweise aus der DE 38 06 710 A1 bekannt geworden. Beim Mischbetrieb, d.h. der gleichzeitigen Verbrennung von Gas und Kohlenstaub sieht der bekannte Brenner das Austreten von Kohlenstaub und einer Mischung aus Gas- und Verbrennungsluft aus Düsen vor, die am Kopf des Brenners angeordnet sind, wobei die Austrittsöffnungen für das Gas-Luft-Gemisch die Austrittsöffnungen für den Kohlenstaub konzentrisch umgeben. Der Kohlenstaub wird mit Hilfe von Förderluft durch den bekannten Brenner gefördert und beim Austritt aus den Düsen verwirbelt.

Über die Art des verwendeten Kohlenstaubs macht die bekannte Schrift keine näheren Angaben. Es ist nun aber bekannt, daß beim Verbrennen von Kohlenstaub in der mineralischen Schüttung in unmittelbarer Umgebung des Austritts aus der Brennerdüse örtliche Überhitzungen auftreten können.

Im Falle des Betriebs von Schachtöfen für die Wärmebehandlung von mineralischem Gut wird angestrebt, daß sich die Verbrennung gleichmäßig über den gesamten Querschnitt des Ofenschachtes ausbreitet. Dieser Schacht ist aber mit dem mineralischen Gut angefüllt, das für den freien Austritt des Brennstoffs, insbesondere eines festen Brennstoffs wie Kohlenstaub, einen Widerstand bildet. Als Folge davon können örtliche Überhitzungen an den Stellen des Austritts des Kohlenstaubs aus dem Brennerkopf auftreten. Die Überhitzungen führen zu einer unzulässigen thermischen Beanspruchung des Zentralbrenners. Jedenfalls hat die Erfahrung gezeigt, daß mit dem bekannten Kombinationsbrenner eine Verteilung des Braunkohlestaubs als Brennstoff über den gesamten Querschnitt des Schachtofens nicht erreicht werden kann.

Aus den Nachteilen der bekannten Verfahren bzw. Einrichtungen ergibt sich die Aufgabe für die vorliegende Erfindung, einen Zentralbrenner für Schachtöfen so auszugestalten, daß er sowohl allein mit Gas als auch mit Gas und Kohlenstaub gemeinsam als Brennstoff betrieben werden kann. Bei der Verwendung von Braunkohlenstaub soll das Auftreten von Überhitzungen in der Nähe der Mündungen der Kohlenstaubdüsen vermieden werden. Weiterhin soll eine gleichmäßige Verteilung des Brennstoffs über den gesamten Querschnitt des Schachtofens erreicht werden. Darüber hinaus soll die konstruktive Ausgestaltung des Brenners einfach und robust sein; der Brenner selbst soll ein hohes Maß an Betriebssicherheit aufweisen.

Zur Lösung dieser Aufgabe wird vorgeschlagen, daß man Kohlenstaub neben dem Gas-Luft-Gemisch, d.h. nicht konzentrisch von diesem Gemisch umgeben, wie im bekannten Falle, im oberen Teil des Brennerkopfes sowie unterhalb der Spreizluft im mittleren Teil austreten läßt. Bei der Verwendung von reaktionsfreudigem Braunkohlenstaub läßt man zusätzlich unterhalb des untern Austritts des Braunkohlenstaubs ein inert wirkendes Gas oder ein Gas-Luft-Gemisch mit einem unterstöchiometrischem Mischungsverhältnis austreten. Als Inertgas eignet sich beispielsweise die Verwendung von CO₂ oder N₂. Als Inertgas kann auch Rückgas oder Abgas aus dem Schachtofen selbst eingesetzt werden. Die charakteristische Zusammensetzung dieses Inertgases beträgt etwa 32% CO₂, 2% O₂, 1 bis 2% CO, Rest N₂.

Durch die Verbrennung des unterstöchiometrischen Gas-Luft-Gemischs wird der Umgebung Sauerstoff entzogen, der für die Verbrennung des Braunkohlenstaubs nicht mehr zur Verfügung steht. Die Folge davon ist, daß der Braunkohlenstaub in der Nähe des Zentralbrenners langsam verbrennt, so daß keine unzulässigen Temperaturspitzen am Zentralbrenner entstehen. Der Kohlenstaub wird mit Hilfe von Förderluft an den Ort der Verbrennung herangeführt. Neben Steinkohlenstaub und dem hochreaktiven Braunkohlenstaub kommt auch die Verwendung von anderen brennbaren Stäuben, wie z.B. Braunkohlenkoksstaub und Stäuben von Kunststoffen oder getrocknetem Klärschlamm sowie geeignete Mischungen solcher Brennstäube in Betracht.

Erfindungsgemäß tritt der Kohlenstaub in zwei, einen axialen Abstand voneinander aufweisenden Ebenen aus dem Brennerkopf aus. Es wurde nun gefunden, daß die pro Zeiteinheit aus dem oberen Teil des Brennerkopfes austretende Menge an Kohlenstaub kleiner sein soll als die aus dem mittleren Teil des Brennerkopfes austretende Menge. Ein günstiges Verhältnis wurde zwischen 0,25 und 1,0 festgestellt.

Bei der Verbrennung von Braunkohlenstaub oder Staub aus Braunkohlenkoks hat es sich als günstig erwiesen, das unterstöchiometrische Mischungsverhältnis des aus der unteren Ebene des Brennerkopfes austretenden Gas-Luft-Gemischs zwischen 0,1 und 0,9 einzustellen. Beispielsweise bei der stöchiometrischen Verbrennung von 1 Nm³ Erdgas werden 8,57 Nm³ Luft benötigt. Im vorliegenden Falle wird zur Einstellung des unterstöchiometrischen Mischungsverhältnisses die entsprechende Menge an Luft zwischen 8 und 1 Nm³ gewählt, wobei erstere fast einer stöchiometrischen Verbrennung gleichkommt.

Bei der konstruktiven Ausgestaltung des Zentralbrenners ist man in der Weise vorgegangen, daß man im Brennerkopf die Düsenöffnungen für den Austritt des Gemischs aus Kohlenstaub und Förderluft in seitlichem Abstand neben den Düsenöffnungen für den Austritt des Gas-Luft-Gemischs angeordnet hat. Dadurch ergibt sich eine Anordnung der Austrittsöffnungen in fast einer einzigen Ebene im oberen Teil des Brennerkopfes. Im mittleren Teil sind die Düsenöffnungen für den Austritt des Gemischs aus Kohlenstaub und Förderluft dagegen so tief wie möglich im unteren Bereich der axialen Länge des mittleren Teils des Brennerkopfes vorgesehen, wo die Spreizluft austritt. Dementsprechend haben die Austrittsöffnungen für den Kohlenstaub einen seitlichen und axialen Abstand zu den meisten der sie umgebenden Austrittsöffnungen für die Spreizluft. Darunter, d.h. unterhalb der untersten Austrittsöffnungen für das Gemisch aus Kohlenstaub und Förderluft, sind sodann weitere Öffnungen für den Austritt des Inertgases bzw. des unterstöchiometrischen Gas-Luft-Gemisches vorgesehen.

Die Einzelheiten über die jeweils günstigste Anordnung der Austrittsöffnungen für die Brennstoffe bzw. die Luft ergeben sich aus den einzelnen Unteransprüchen 7 bis 10.

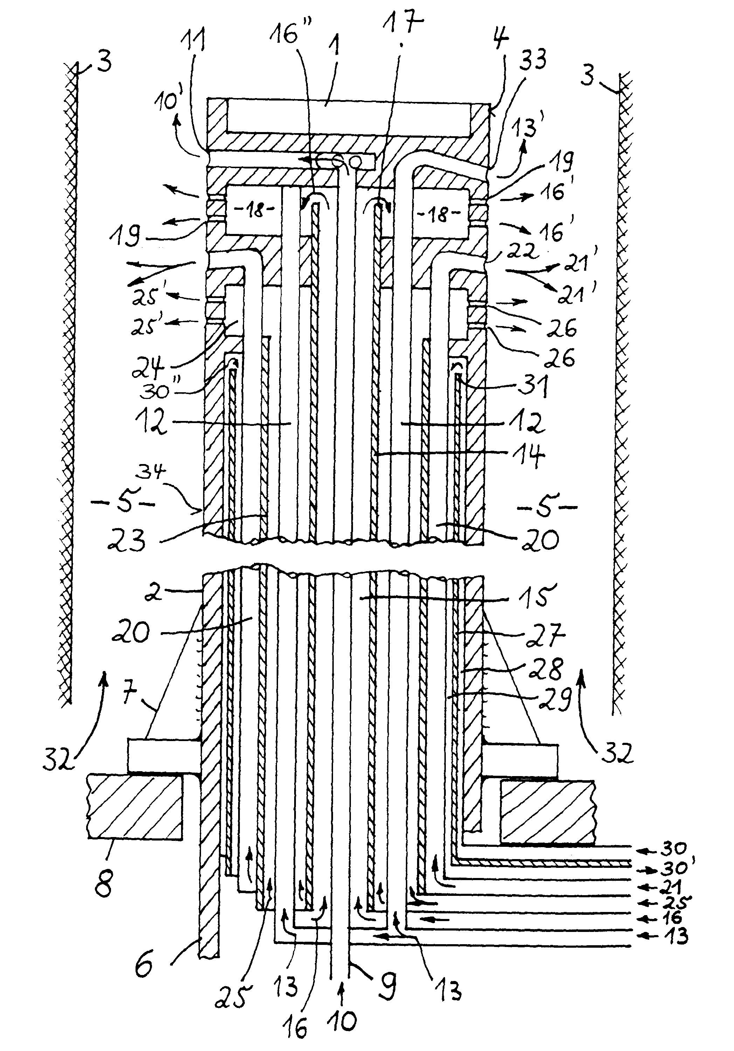

Nachfolgend wird die Erfindung an einem Ausführungsbeispiel näher beschrieben. Die einzige Figur zeigt in stark vereinfachter schematischer und nicht maßstäblicher Darstellung einen Längsschnitt durch einen Zentralbrenner.

Der Zentralbrenner, bestehend aus dem Brennerkopf 1 und dem Brennerfuß 2, sowie einem dazwischenliegenden Schaft 34 ist zentrisch innerhalb eines runden Schachtofens 3 angeordnet. Auf dem Außenumfang 4 des zylindrischen Brennerkopfes 1 münden Düsen und/oder einfache Bohrungen für den Austritt von Brennstoffen und Verbrennungsluft, wie sie zur Wärmebehandlung des mineralischen Gutes erforderlich sind, das den Ringraum 5 zwischen dem Außenumfang 4 des Brenners 1, 2 und 34 und dem Ofenschacht 3 ausfüllt. Im Brennerfuß 2 sind die Zuleitungen für den Brennstoff, die Verbrennungsluft und für Kühlluft angeordnet. Diese Anordnung ist in der vorliegenden Darstellung stark vereinfacht und schematisch wiedergegeben.

Die Außenhaut des Brenners wird von einem Stahlmantel 6 gebildet, der sich mit seitlichen Abstützungen 7 auf einem Sockel 8 abstützt. Konzentrisch über die gesamte Länge des Brenners, d. h. vom Fuß 2 bis Kopf 1, ist ein mittleres Rohr 9 hindurchgeführt, welches der Zufuhr eines brennbaren Gas-Luft-Gemisches 10 dient. Über radiale Kanäle 11 strömt das Gas-Luft-Gemisch 10' am Brennerkopf aus. Konzentrisch um das zentrale Rohr 9 herum sind mehrere Rohre 12 angeordnet, die von einem Gemisch 13 aus Kohlenstaub und Förderluft gespeist werden, das bei 13' in seitlichem Abstand neben dem Gas-Luft-Gemisch 10' zu den Austrittsöffnungen 33 aus dem Brennerkopf 1 austritt. Die Rohre 9 und 12 werden durch einen rohrförmigen Stahlmantel 14 voneinander getrennt, der um das zentrale Rohr 9 herum eine Ringkammer 15 bildet, durch welche die Spreizluft 16 in den Brenner einströmt. Die Spreizluft 16 wird bei 16" an der Oberkante 17 des Stahlmantels 14 umgelenkt und verteilt sich über einen Ringraum 18 im Kopf 1 des Brenners, bevor sie bei 16' am Umfang 4 des Brennerkopfes 1 durch Düsen 19 oder einfache Bohrungen austritt. Die in den Ringraum 18 deutlich hineingezogene Oberkante 17 des Stahlmantels 14 dient dazu, die Spreizluft 16 gleichmäßig über den Ringraum 18 zu verteilen, bevor sie aus den Düsen 19 austreten kann. Die Pfeile 16'' deuten die Umlenkung an, welche die Spreizluft 16 beim Austritt aus dem Stahlmantel 14 erfährt. Wiederum konzentrisch zum zentralen Rohr 9 ist eine Mehrzahl von Rohren 20 angeordnet und zwar auf einem größeren Umfang als die Rohre 12. Die Rohre 20 sind zur Zufuhr eines Gemischs 21 aus Kohlenstaub und Förderluft vorgesehen, das bei 21' aus radialen Düsen 22 unterhalb des Austritts der Spreizluft 16' am Brennerkopf 1 austritt. Wie man in der Darstellung sieht, erfolgt der Austritt 21' des Gemischs 21 in der Weise, daß es sich möglichst weit in radialer Richtung über den Ringraum 5 ausbreiten kann.

Auf ihrer Innenseite werden die Rohre von einem weiteren Stahlmantel 23 abgestützt, der sich zu einem Ringraum 24 hin öffnet. Dem Ringraum 24 wird über einen Anschluß im Fuß 2 ein Inertgas oder ein unterstöchiometrisches Gas-Luft-Gemisch 25 zugeführt. Es tritt bei 25' über Düsen 26 oder einfache Bohrungen verteilt aus dem Ringraum 24 aus und in den Ringraum 5 des Schachtofens 3 ein. Der axiale Abstand zwischen den Düsen 22 und 26 ist gering, damit sich unterhalb der Düsen 22 örtliche Überhitzungen nicht bilden können.

Der Vollständigkeit halber ist noch ein dritter Stahlmantel 27 zu erwähnen, welcher innerhalb des Brenners äußere Ringkammern 28 und 29 bildet. Der äußeren Ringkammer 28 wird über einen Anschluß Kühlluft 30 zugeführt, die an der Oberkante 31 des Stahlmantels nach innen umgelenkt wird, und als erwärmte Luft 30' am Fuß 2 wieder austritt, nachdem sie den Brenner der Länge nach durchströmt hat. Die Pfeile 30'' deuten die Umlenkung an, welche die Kühlluft 30 an der Oberkante 31 des Stahlmantels 27 erfährt. Es ist üblich, die erwärmte Luft 30' als Spreizluft 16 wieder in den Brenner einzuspeisen.

In der nachstehenden Tabelle wird eine Gegenüberstellung des reinen Gasbetriebs mit einem Mischbetrieb von Erdgas und Braunkohlenstaub gegeben. Die Spalte 1 der Tabelle stellt die Verhältnisse bei reinem Erdgasbetrieb dar. Die Spalte 2 der Tabelle stellt die Verhältnisse dar, wie sie sich aus dem gemischten Betrieb von Erdgas und Braunkohlenstaub ergeben.

| | | | 1 | 2 |
|---|---|---|---|---|
| Ofenleistung | | t CaO/d | 141 | 142 |
| spez. Wärmebedarf | | kcal/kg CaO | 1 122 | 1 121 |
| Energieeintrag | | Gcal/h | 6.59 | 6.63 |
| ges. Lufteintrag | | Nm³/h | 7 760 | 7 910 |
| Luftüberschuß | | | 1.07 | 1.06 |

| Brennst. o. Ebene | | | | |
|---|---|---|---|---|
| Erdgas | | Nm³/h | 295 | 75 |

| Braunkohlenstaub | | | | |
|---|---|---|---|---|
| BKS | | kg/h | 0 | 300 |
| Energieanteil | | % | 35 | 32 |

| Brennst. Hauptebene | | | | |
|---|---|---|---|---|
| Erdgas | | Nm³/h | 550 | 175 |

| Braunkohlenstaub | | | | |
|---|---|---|---|---|
| BKS | | kg/h | 0 | 600 |
| Energieanteil | | % | 65 | 68 |
| Ges. BKS-Energieant. | | % | 0 | 71 |

| Luftmenge o. Ebene | | | | |
|---|---|---|---|---|
| Gasverdünnung | | Nm³/h | 170 | 120 |
| BKS-Förderluft | | Nm³/h | 133* | 265 |

| Luftm. Hauptebene | | | | |
|---|---|---|---|---|
| Gasverdünnung | | Nm³/h | 550 | 280 |
| BKS-Förderluft | | Nm³/h | 267* | 535 |
| Spreizluftmenge | | Nm³/h | 3 580 | 3 970 |
| Unterluftmenge | | Nm³/h | 3 060 | 2 740 |
| Abgaswerte | CO₂ | Vol % | 31,9 | 36,0 |
| | O₂ | Vol % | 1,1 | 1,6 |
| | CO | Vol % | 0,8 | 0,1 |
| Kalkqualität | Rest CO₂ | Gew % | 1,9 | 1,98 |
| | Reaktivität | | 0,5 - 2 Min | 1 - 2 Min |
| | Grobkorn | | 300/370/390 | 311/412/423 |

| | | | | |
|---|---|---|---|---|
| * beim reinen Gasbetrieb handelt es sich um Sperrluft | | | | |

Zur Erläuterung der Tabelle wird ausgeführt, daß unter dem Begriff "Brennstoff obere Ebene" jener Bereich des Brennerkopfes verstanden wird, wo das Gas-Luft-Gemisch 10' sowie das Gemisch 13' aus Braunkohlenstaub und Förderluft austreten. Unter dem Begriff "Brennstoff Hauptebene" wird jener Bereich des Brennerkopfes gesehen, wo das Gemisch 21' aus Braunkohlenstaub und Förderluft und das unterstöchiometrische Gas-Luft-Gemisch 25' austreten. Unter dem Begriff "Unterluft" wird schließlich jene Luftmenge 32 verstanden, die den Ringraum 5 des Schachtofens 3 von unten nach oben durchströmt, sobald der Zentralbrenner in Betrieb ist.

## Patentansprüche

1. Verfahren zum Beheizen von Schachtöfen für die Wärmebehandlung von mineralischem Gut durch einen aus drei vertikal-angeordneten Teilen bestehenden Zentralbrenner, wobei aus dem oberen und unteren Teil eines Brennerkopfes (1) jeweils ein brennbares Gas (10, 25) oder Gas-Luft-Gemisch (10', 25') und dazwischen aus einem mittleren Teil des Brennerkopfes (1) Spreizluft (16) in den Schacht (3) des Ofens austreten und dort die Entsäuerungsreaktion des mineralischen Gutes ausgelöst wird, dadurch gekennzeichnet, daß man ein Gemisch aus Kohlenstaub und Förderluft (13, 21)
im oberen Teil bei (13) in seitlichen Abstand neben dem Gas oder Gas-Luft-Gemisch (10, 10') und
im mittleren Teil bei 21' zwischen der Spreizluft (16) austreten läßt.

2. Verfahren nach Anspruch 1, dadurch gekennzeichnet, daß man ein Gemisch aus Braunkohlenstaub und unterhalb des unteren Austritts des Braunkohlenstaubs bei 25 ein Inertgas oder ein Gas-Luft-Gemisch (25) mit einem unterstöchiometrischem Mischungsverhältnis austreten läßt.

3. Verfahren nach einem der Ansprüche 1 oder 2, dadurch gekennzeichnet, daß man das Verhältnis der in der Zeiteinheit aus dem oberen Teil zu der aus dem unteren Teil austretenden Menge an Kohlenstaub zwischen 0,25 und 1,0 wählt.

4. Verfahren nach einem der Ansprüche 1 bis 3, dadurch gekennzeichnet, daß man Staub aus Steinkohlen- oder Braunkohlenkoks verwendet.

5. Verfahren nach einem der Ansprüche 1 bis 4, dadurch gekennzeichnet, daß man das unterstöchiometrische Mischungsverhältnis des Gas-Luft-Gemischs zwischen 0,1 und 0,9 einstellt.

6. Zentralbrenner zum Beheizen von Schachtöfen für die Wärmebehandlung von mineralischem Gut mit einem zylindrischen Brennerkopf in dessen einen axialen Abstand voneinander aufweisenden oberem und unterm Teil Öffnungen zum Austritt eines brennbaren Gases oder Gas-Luft-Gemischs vorgesehen sind und der einen dazwischenliegenden mittleren Teil aufweist, in dem öffnungen zum Austritt von Spreizluft in den Schacht des Ofens vorgesehen sind, dadurch gekennzeichnet, daß
- in seitlichem Abstand neben den Öffnungen (11) des oberen Teils
sowie
- zwischen den Öffnungen (19) für die Spreizluft (16') des mittleren Teils,
weitere Öffnungen (22, 33) für das Austreten von Kohlenstaub (13', 21') vorgesehen sind, wobei die untersten dieser Öffnungen (22) oberhalb der Öffnungen (26) des unteren Teils für den Austritt des Gases oder Gas-Luft-Gemischs (25') angeordnet sind.

7. Zentralbrenner nach Anspruch 6, dadurch gekennzeichnet, daß der axiale Abstand zwischen den untersten Öffnungen (22) für den Austritt von Kohlenstaub (21') und den unterhalb davon angeordneten Öffnungen (26) für den Austritt des Gases oder Luft-Gas-Gemischs (25') zwischen 3 und 20 cm beträgt.

8. Zentralbrenner nach einem der Ansprüche 6 bis 7, dadurch gekennzeichnet, daß das Verhältnis der Anzahl der Austrittsöffnungen (22, 33) für den Kohlenstaub (13', 21') im oberen (33) und mittleren Teil (22) des Brennerkopfes (1) zwischen 1/3 und 3/1 beträgt.

9. Zentralbrenner nach einem der Ansprüche 6 bis 8, dadurch gekennzeichnet, daß im oberen Teil des Brennerkopfes (1) das Verhältnis der Anzahl der Austrittsöffnungen (11) für das Gas oder Gas-Luft-Gemisch (10') zu den Austrittsöffnungen (33) für den Kohlenstaub (13') zwischen 1/3 und 3/1 beträgt.

10. Zentralbrenner nach einem der Ansprüche 6 bis 9, dadurch gekennzeichnet, daß das Verhältnis der Anzahl der Austrittsöffnungen (19, 26) für die Spreizluft (16') und das Gas oder Gas-Luft-Gemisch (25') im unteren Teil des Brennerkopfes (1) zwischen 2/1 bis 1/1 beträgt.

## Claims

1. A process for heating shaft furnaces for the heat treatment of mineral material by a central burner comprising three vertically arranged parts, wherein a combustible gas (10, 25) or gas-air mixture (10', 25') respectively issues from each of the upper and lower parts of a burner head (1) into the shaft (3) of the furnace and therebetween spreading air (16) issues from a central part of the burner head (1) into the shaft (3) of the furnace and there the deacidification reaction of the mineral material is triggered, characterised in that a mixture of coal dust and conveyor air (13, 21) is caused to issue in the upper part at (13) at a lateral spacing beside the gas or the gas-air mixture (10, 10') and in the central part at 21' between the spreading air (16).

2. A process according to claim 1 characterised by discharging a mixture of brown coal dust and beneath the lower discharge of the brown coal dust at 25 an inert gas or a gas-air mixture (25) with a substoichiometric mixing ratio.

3. A process according to one of claims 1 and 2 characterised in that the ratio of the amount of coal dust issuing in a unit of time from the upper part relative to that from the lower part is between 0.25 and 1.0.

4. A process according to one of claims 1 to 3 characterised in that dust from pit coal coke or brown coal coke is used.

5. A process according to one of claims 1 to 4 characterised in that the substoichiometric mixing ratio of the gas-air mixture is set at between 0.1 and 0.9.

6. A central burner for heating shaft furnaces for the heat treatment of mineral material comprising a cylindrical burner head whose upper and lower parts which are at an axial spacing from each other have openings for the issue of a combustible gas or gas-air mixture and which has a central part which is disposed therebetween and which has openings for the issue of spreading air into the shaft of the furnace, characterised in that further openings (22, 33) for the issue of coal dust (13', 21') are provided
- at a lateral spacing beside the openings (11) of the upper part, and
- between the openings (19) for the spreading air (16') of the central part,
wherein the lowermost ones of said openings (22) are arranged above the openings (26) of the lower part for the issue of the gas or gas-air mixture (25').

7. A central burner according to claim 6 characterised in that the axial spacing between the lowermost openings (22) for the issue of coal dust (21') and the openings (26) arranged therebeneath for the issue of the gas or gas-air mixture (25') is between 3 and 20 cm.

8. A central burner according to one of claims 6 and 7 characterised in that the ratio of the number of outlet openings (22, 23) for the coal dust (13', 21') in the upper part (33) and the central part (22) of the burner head (1) is between 1/3 and 3/1.

9. A central burner according to one of claims 6 to 8 characterised in that in the upper part of the burner head (1) the ratio of the number of outlet openings (11) for the gas or gas-air mixture (10') to the outlet openings (33) for the coal dust (13') is between 1/3 and 3/1.

10. A central burner according to one of claims 6 to 9 characterised in that the ratio of the number of outlet openings (19, 26) for the spreading air (16') and the gas or gas-air mixture (25') in the lower part of the burner head (1) is between 2/1 to 1/1.

## Revendications

1. Procédé pour chauffer des fours à cuve pour le traitement à chaud de matières minérales, au moyen d'un brûleur central constitué de trois parties disposées à la verticale, en assurant l'éjection d'un courant de gaz combustible (10,25) ou d'un mélange de gaz et d'air (10',25') par le haut et le bas d'une tête de brûleur (1), et entre les deux, l'éjection d'un courant d'air de déflexion (16) par une partie médiane de la tête du brûleur (1), pour que ces courants gazeux se diffusent dans la cuve (3) du four afin d'y réaliser la réduction chimique des matières minérales à traiter, *caractérisé* en ce qu'on assure en outre l'éjection d'un mélange de charbon pulvérisé et d'air vecteur (13,21) en (13') dans la partie supérieure, à côté des sorties du gaz ou du mélange de gaz et d'air (10,10'), avec un décalage latéral, et aussi en (21'), dans la partie médiane entre les sorties du courant d'air de déflexion (16).

2. Procédé selon la revendication 1, *caractérisé* en ce qu'on assure l'éjection d'un mélange de lignite pulvérisé, et, en dessous de chaque orifice inférieur de sortie du courant de lignite pulvérisé, l'éjection d'un courant (25) de gaz inerte ou d'un mélange hypostoechiométrique de gaz et d'air.

3. Procédé selon l'une des revendications 1 ou 2, *caractérisé* en ce qu'on opère avec un rapport compris entre 0,25 et 1,0 pour le débit par unité de temps du charbon pulvérisé éjecté par le haut du brûleur comparé au débit de charbon pulvérisé éjecté par le bas de la tête du brûleur.

4. Procédé selon l'une des revendications 1 à 3, *caractérisé* en ce qu'on utilise du charbon pulvérisé à base de houille ou de lignite.

5. Procédé selon l'une des revendications 1 à 4, *caractérisé* en ce qu'on règle la concentration hypostoechiométrique du mélange de gaz et d'air entre 0,1 et 0,9.

6. Brûleur central pour chauffer un four à cuve servant à traiter à chaud des matières minérales, comportant une tête de brûleur de forme cylindrique, dans le haut et le bas de laquelle sont prévus des orifices d'éjection pour débiter un courant de gaz combustible ou un mélange de gaz et d'air, et une partie médiane située entre le haut et le bas où sont prévus des orifices d'éjection pour un courant d'air de déflexion diffusé dans la cuve du four, *caractérisé* en ce qu'il comporte d'autres orifices d'éjection (22,33) pour débiter un courant de charbon pulvérisé (13',21'),
- ces orifices d'éjection supplémentaires (33) étant prévus dans le haut de la tête du brûleur à côté des orifices déjà ménagés (11) et avec un décalage latéral par rapport à ceux-ci,
- et également (22) dans la partie médiane de la tête du brûleur, entre les orifices d'éjection (19) déjà prévus pour le courant d'air de déflexion (16'),
- ceux de ces orifices d'éjection supplémentaires situés le plus en bas (22) étant disposés dans le bas de la tête du brûleur, au-dessus des orifices d'éjection (26) déjà prévus pour le débit d'un courant de gaz ou d'un mélange de gaz et d'air (25').

7. Brûleur central selon la revendication 6, *caractérisé* en ce que le décalage prévu dans le sens axial, entre les orifices d'éjection (22) disposés le plus en bas pour débiter le courant de charbon pulvérisé (21'), et les orifices d'éjection (26) situés encore plus bas pour débiter le courant de gaz ou le mélange d'air et de gaz (25'), est compris entre 3 et 20 cm.

8. Brûleur central selon l'une des revendications 6 ou 7, *caractérisé* en ce qu'il existe un rapport allant de 1/3 à 3/1 entre les nombres des orifices d'éjection (22,33) prévus pour le courant de charbon pulvérisé (13',21') dans la partie supérieure (33) de la tête (1) du brûleur, et dans la partie médiane (22) de la tête.

9. Brûleur central selon l'une des revendications 6 à 8, *caractérisé* en ce que, dans la partie supérieure de la tête (1) du brûleur, il existe un rapport allant de 1/3 à 3/1 entre le nombre des orifices d'éjection (11) prévus pour le courant de gaz ou le mélange de gaz et d'air (10') et le nombre des orifices d'éjection (33) prévus pour le courant de charbon pulvérisé (13').

10. Brûleur central selon l'une des revendications 6 à 9, *caractérisé* en ce qu'il existe un rapport allant de 2/1 à 1/1, entre les nombres des orifices d'éjection (19,26) prévus dans la partie inférieure de la tête (1) du brûleur, pour le courant d'air de déflexion (16') et pour le courant de gaz ou le mélange de gaz et d'air (25').
